Europäisches Patentamt

European Patent Office

Office européen des brevets

(19)

(11) Numéro de publication: **0 490 767 B1**

# (12) FASCICULE DE BREVET EUROPEEN

(45) Date de publication de fascicule du brevet: **03.05.95**  (51) Int. Cl.6: **C09K 5/04**

(21) Numéro de dépôt: **91403366.7**

(22) Date de dépôt: **12.12.91**

Le dossier contient des informations techniques présentées postérieurement au dépôt de la demande et ne figurant pas dans le présent fascicule.

(54) **Fluide de travail pour pompes à chaleur à absorption fonctionnant à très hautes températures.**

(30) Priorité: **14.12.90 FR 9015697**

(43) Date de publication de la demande:
**17.06.92 Bulletin   92/25**

(45) Mention de la délivrance du brevet:
**03.05.95 Bulletin   95/18**

(84) Etats contractants désignés:
**BE DE GB IT**

(56) Documents cités:
**FR-A- 2 148 267**
**FR-A- 2 506 498**
**US-A- 3 195 304**

**Gmelins Handbuch der anorganischen Chemie, 8me ed.,Vol.34, No A2 1962, pages 789,915,916,920,921,1005.**

**Gmelins Handbuch der anorganischen Chemie,Vol.9, No.A, 1953, pages 696-697.**

**Gmelins Handbuch der anorganischen Chemie, Vol.21,No.1,1964,pages 8-9.**

(73) Titulaire: **COMMISSARIAT A L'ENERGIE ATO-MIOUE**
**31-33, rue de la Fédération**
**F-75015 Paris (FR)**

(72) Inventeur: **Le Goff, Pierre**
**22 rue de la Croix**
**F-54000 Nancy (FR)**
Inventeur: **Liu, Bai Oui**
**2 rue Dauphine**
**F-54000 Nancy (FR)**
Inventeur: **Antonakas, Dimitrios**
**Le Bouquet**
**F-13100 Saint Antonin sur Bayon (FR)**
Inventeur: **Marbach, Gabriel**
**Chemin du Mont d'Or**
**F-04100 Manosque (FR)**

(74) Mandataire: **Poulin, Gérard et al**
**Société BREVATOME**
**25, rue de Ponthieu**
**F-75008 Paris (FR)**

EP 0 490 767 B1

## Description

La présente invention se rapporte d'une manière générale aux dispositifs connus sous le nom de pompes à chaleur à absorption, qui sont des appareils thermodynamiques dans lesquels on prélève de la chaleur dans une "source froide" pour la faire passer dans une "source chaude", la contrepartie de cette transformation étant, en accord avec les lois de la thermodynamique, la réception par le dispositif d'un certain travail en provenance de l'extérieur.

De façon connue ces pompes à chaleur fonctionnent à l'aide d'un mélange binaire liquide auquel on fait parcourir un cycle fermé où il subit successivement une concentration dans un séparateur et une dilution dans un mélangeur.

Pour mieux faire comprendre l'invention, on commencera par rappeler le fonctionnement d'une pompe à chaleur à absorption d'un type connu, utilisant un mélange ordinaire d'eau et de soude caustique. Ce mélange est utilisé pour ses propriétés thermodynamiques intrinsèques, résidant dans le fait que l'absorption de vapeur d'eau dans une solution de soude est exothermique, alors qu'il faut chauffer le mélange pour séparer les deux constituants par vaporisation de l'eau, et, d'autre part, dans le fait que la soude, non volatile, abaisse fortement la pression de vapeur d'eau de la solution.

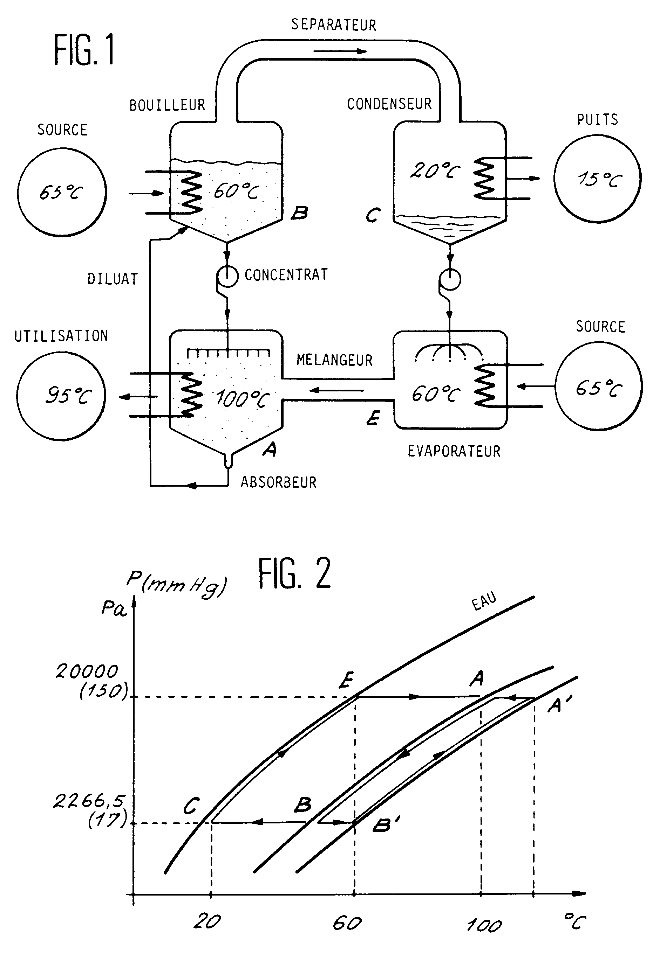

Cette pompe à chaleur en soi connue est constituée fondamentalement de quatre appareils visibles sur la figure 1 :
- l'évaporateur E dans lequel entre de l'eau liquide pure qui s'évapore à 60°C et donne de la vapeur sous 20000 Pa (150 mmHg) ;
- l'absorbeur A dans lequel ruisselle une solution concentrée de soude caustique (c'est le "concentrat") à 1 kg de NaOH par kg d'eau. La vapeur d'eau est absorbée et forme une solution un peu diluée, soit à 0,9 kg de NaOH par kg d'eau (c'est le "diluat") ;

   Cette absorption est exothermique : l'absorption se fait à 100°C (voir diagramme de la figure 2) et la chaleur ainsi produite est évacuée à l'extérieur par un échangeur de chaleur où existe un gradient de l'ordre de 5°C. Elle est donc disponible à 95°C. L'ensemble de l'évaporateur E et de el'absorbeur A constitue l'étage mélangeur de la pompe.
- Le bouilleur-désorbeur B dont la fonction est de régénérer la solution : il y entre le diluat et il en sort le concentrat. On est libre de choisir la température et donc la pression de travail de ce bouilleur.

On a choisi sur cet exemple un bouilleur à 60°C, donc alimenté à partir d'une source de chaleur à 65°C. Le bouilleur produit donc de la vapeur d'eau sous 2266,5 Pa (17 mmHg).
- Le condenseur C dans lequel cette vapeur d'eau sous 2266,5 Pa (17 mmHg) se condense au contact d'un échangeur à 20°C, donc alimenté à partir d'une source "froide" à environ 15°C. L'ensemble du bouilleur B et du condenseur C constitue l'étage-désorbeur de la pompe.

Le bilan thermique de l'installation s'analyse comme suit :
- Le bouilleur B et l'évaporateur E sont à 60°C, alimentés par une source de chaleur à 65°C ;
- le condenseur C est à 20°C et débite dans la source "froide" à 15°C ;
- l'absorbeur A est à 100°C et fournit de la chaleur utile à environ 95°C.

Bien entendu ces quatre appareils fondamentaux sont reliés par des pompes de circulation, des vannes de détente et des échangeurs-récupérateurs, non présentés sur la figure 1.

Le cycle de fonctionnement du système est représenté sur le di agramme de Clapeyron (log p, T) de la figure 2.

Le cycle ABCE est le circuit de vapeur d'eau :
A = absorbeur
B = bouilleur-désorbeur
C = condenseur
E = évaporateur
Le cycle ABB'A est le circuit de la solution :
AB = diluat
A'B' = concentrat

Du fait de l'enthalpie de vaporisation de l'eau ($H_v$ = 2,3 MJ (550 kcal/kg)) qui est exceptionnellement grande, il suffit de vaporiser-condenser peu d'eau pour valoriser beaucoup de chaleur : en vaporisant-condensant 1 kg d'eau, on revalorise ainsi, de 65°C à 95°C, une quantité de chaleur de :

$$550 \text{ kcal} = 2,3 \text{ Mj} = 0,64 \text{ kWh}$$

On peut admettre, en première approximation, que les efficacités de transfert de chaleur du condenseur C et de l'absorbeur A sont égales. Il en résulte que le flux de chaleur dégradé au condenseur C est égal (ou tout au moins à peine supérieur) à celui revalorisé dans l'absorbeur A.

Autrement dit, le rendement de l'ensemble est égal (ou un peu inférieur) à 50% : pour deux calories à 65°C qui entrent dans le système, l'une est valorisée à 95°C et l'autre est rejetée à 15°C. Ce sont précisément les calories entrant à 65°C et valorisées à 95°C qui confèrent à l'installation son statut de pompe à chaleur.

Une étude théorique des pompes à chaleur à absorption peut être consultée par exemple dans la "Revue Générale de Thermique", n° 320-321, Août-Sept. 1988, p. 451 et suivantes.

Pour la compréhension de la suite du présent texte, on rappellera qu'il existe deux types de pompes à chaleur à absorption, selon les températures du séparateur et du mélangeur. Lorsque le séparateur est à températures plus élevées que le mélangeur, on dit qu'il s'agit de pompes à chaleur classiques ou du premier type. Lorsqu'au contraire, le mélangeur est à températures plus élevées que le séparateur, on dit qu'il s'agit de pompes à chaleur du deuxième type, parfois appelées aussi thermotransformateurs.

De telles pompes à chaleur à absorption utilisant des mélanges binaires fonctionnent avec satisfaction et sans problème majeur, mais bien entendu dans un domaine de température relativement limité vers les hautes températures de l'ordre de cent cinquante degrés Celcius environ s'il s'agit de mélange aqueux ; si le fluide de travail est constitué de mélanges organiques, les températures de fonctionnement sont limitées bien entendu aux températures de décomposition des constituants de ce même mélange.

Or, il existe dans l'industrie des installations thermiques à haute et très haute température, par exemple 1000°C et au-delà où des quantités de chaleur importantes sont rejetées sans pouvoir être utilisées du fait qu'il n'existe pas de pompes à chaleur travaillant dans ces zones de température. C'est le cas par exemple des installations ou chaudières à production de vapeur d'eau ou des centrales thermiques nucléaires ou non. Jusqu'à ce jour, aucune possibilité de réaliser des pompes à chaleur à des températures très hautes de cet ordre, n'avaient pu être envisagées.

On connaît par ailleurs les documents suivants :

- Gmelins Handbuch der anorganischen Chemie, 8me éd., Vol. 34, n° A2, 1962, (Verlag Chemie, Weinheim), pages 789, 915, 916, 920, 921, 1005, qui décrit des mélanges Hg-Na et Hg-Na-K ;
- Gmelins Handbuch der anorganischen Chemie, 8me éd., Vol. 9, n° A, 1953, (Verlag Chemie, Weinheim), pages 696-697, qui décrit des mélanges S-Na ;
- Gmelins Handbuch der anorganischen Chemie, 8me éd., Vol. 21, n° 1, 1964, (Verlag Chemie, Weinheim), pages 8-9, qui décrit des mélanges Na-Pb et Na-Sn ;
- le document US-A-3 195 304 qui décrit la préparation d'alliages métalliques alcalins et notamment la préparation d'un alliage ternaire Na-K-Cs, et leur utilisation pour le transfert de l'énergie.

La présente invention a précisément pour objet des pompes à chaleur fonctionnant à très haute température qui résolvent ce problème d'une manière particulièrement simple et inattendue pour l'homme de métier.

L'invention a donc pour objet une pompe à chaleur à absorption fonctionnant à très haute température, comprise entre 200°C à 1000°C, comprenant un étage mélangeur formé d'un évaporateur et d'un absorbeur et un étage séparateur formé d'un bouilleur et d'un condenseur, utilisant un fluide de travail constitué d'un mélange d'au moins deux constituants et soumis dans ces étages à des cycles successifs de mélange, pour donner une solution à faible concentration de soluté ou solution diluée, et de séparation, pour donner une première phase liquide constituée de solvant pur ou quasi-pur et une seconde phase liquide constituée d'une solution concentrée, le bouilleur recevant le mélange formé dans l'absorbeur et provoquant, sous l'effet de la chaleur fournie par une première source de chaleur, l'évaporation du solvant qui est envoyé dans le condenseur, la solution concentrée résultante étant dirigée vers l'absorbeur, le condenseur condensant le solvant sous l'effet d'une source froide et envoyant le solvant condensé à l'évaporateur où il est évaporé sous l'effet d'une deuxième source de chaleur et envoyé sous cette forme à l'absorbeur qui réalise à nouveau le mélange pour fournir la solution à faible concentration de soluté et une quantité de chaleur vers une source d'utilisation, caractérisée en ce que le fluide de travail est constitué par un mélange d'au moins deux éléments chimiques simples choisis de manière que les composés définis qu'ils pourraient éventuellement former entre eux soient instables et facilement dissociables à haute température, le premier de ces éléments étant le solvant qui est beaucoup plus volatil à la température du mélange que le ou les autres éléments qui forment les solutés, la nature et les proportions de chacun des éléments chimiques simples dans le mélange étant choisies pour que la pression de vapeur du mélange soit notablement inférieure à celle du seul premier élément le plus volatil tout au long du cycle de fonctionnement du fluide de travail dans la pompe.

La caractéristique essentielle de l'invention selon laquelle le fluide de travail de la pompe à chaleur est un mélange de corps chimiques simples conduit à deux avantages extrêmement importants.

D'une part, les corps simples ne présentant pas le risque, inhérent aux corps composés, de se décomposer lorsque la température augmente, permettent l'emploi des pompes à chaleur à température élevée, notamment au-dessus de 200°C.

D'autre part, beaucoup de corps simples peuvent être mélangés en toutes proportions, variant de façon continue, ce qui permet une souplesse totale d'obtention d'un fluide ayant des caractéristiques thermodynamiques bien déterminées, et prévisibles sur un diagramme de Clapeyron. Selon l'invention, et à cet effet, on choisit précisément les différents corps simples associés dans le fluide, de manière que les composés définis qu'ils pourraient éventuellement former entre eux, soient instables et facilement dissociables à haute température.

Selon l'invention, une réalisation particulièrement intéressante du fluide de travail pour pompes à chaleur est celui où les corps chimiques simples sont des métaux liquides à température élevée.

En effet, les techniques de circulation et de pompage en circuit fermé de métaux liquides ont progressé considérablement dans les vingt dernières années, notamment sous l'effet d'études menées dans le domaine des réacteurs nucléaires dont certains types sont précisément refroidis par de tels métaux liquides. Du point de vue strictement mécanique et hydrodynamique, il n'y a donc pas d'obstacle à la réalisation de fluides de travail pour pompes à chaleur fonctionnant à très haute température si l'on est en mesure de trouver des couples de métaux correspondant aux propriétés thermodynamiques exigées pour en faire de tels fluides de travail. Or, le demandeur a précisément mis en évidence qu'il existait des couples de métaux liquides dans lesquels la pression de vapeur du mélange était notablement inférieure à celle du seul premier métal le plus volatil, ce qui permet la réalisation d'une pompe à chaleur utilisant ce fluide.

Selon une caractéristique importante de la présente invention, le premier métal solvant volatil est constitué par le mercure et le second métal soluté peu volatil par le sodium.

De façon plus précise encore, un mélange idéal correspond à 0,14 kg de sodium par kg de mercure à l'état de concentration de ce mélange et à 0,10 kg de sodium par kg de mercure à l'état de dilution.

Selon une autre caractéristique également intéressante de la présente invention, le fluide de travail est constitué à l'aide de sodium comme premier métal volatil et de plomb pour le second métal.

Un mélange idéal de cette nature correspond à 16,7 kg de plomb par kg de Na à l'état de concentration et à 9 kg de Pb par kg de Na à l'état de dilution.

Selon l'invention, un troisième mélange métallique binaire est constitué à l'aide du sodium comme premier métal volatil et de l'étain comme second métal.

Une composition particulièrement performante de ce dernier couple métallique correspond à 9,6 kg de Sn par kg de Na à l'état de concentration et à 5,2 kg de Sn par kg de Na à l'état de dilution.

Des compositions intéressantes de fluide de travail constitué de métaux liquides se caractérisent en ce que le métal solvant volatil est le sodium et les métaux solutés sont le plomb et l'étain, en proportions relatives comprises entre 15% et 85% de chacun de ces deux métaux.

Un autre exemple de réalisation du fluide de travail, utilisable pour la présente invention, se caractérise en ce que le métal solvant volatil est le mercure et les métaux solutés sont le sodium et le potassium en proportions relatives comprises entre 15% et 85% de chacun de ces deux métaux.

Dans ce cas de préférence, la concentration de soluté (s) (sodium pur ou mélange sodium/potassium) est comprise entre 0,10 et 0,20 kg de soluté (s) par kg de mercure dans la solution concentrée et entre 0,05 et 0,15 par kg dans la solution diluée.

Enfin, selon un autre mode de mise en oeuvre de l'invention, le fluide de travail se compose d'un élément chimique "solvant" qui est un métalloïde, tel que par exemple l'iode, le phosphore ou le soufre et d'un élément chimique "soluté" qui est un métal, tel que par exemple le sodium.

Dans ce cas, l'élément chimique "soluté est un métal choisi pour que la pression de vapeur audessus des solutions concentrée et diluée, soit notablement inférieure à celle du seul métalloïde pur.

La présente invention a également pour objet un certain nombre d'applications des fluides de travail mentionnés précédemment, applications dans lesquelles la chaleur utile est extraite à température élevée.

Une première application de l'invention concerne une pompe à chaleur à absorption de type II, ou thermotransformateur, fonctionnant entre une source chaude à température comprise entre 300°C et 450°C et une source froide à température au maximum égale à 200°C, et revalorisant une fraction de la chaleur issue de la source chaude en la portant à une température supérieure, cette élévation de température étant au minimum de 200°C et au maximum de 400°C.

Une deuxième application de l'invention concerne une installation comprenant une pompe à chaleur de type I associée à une chaudière de production de vapeur d'eau, caractérisée en ce que le séparateur de la pompe à chaleur est thermiquement intercalé entre la chambre de combustion et un premier évaporateur producteur de vapeur d'eau à une température comprise entre 300°C et 450°C et dont le mélangeur revalorise une chaleur issue d'une source chaude quelconque disponible à basse température, soit au minimum égale à 160°C, en élevant son niveau thermique suffisamment pour chauffer un deuxième évaporateur producteur de vapeur d'eau à une température comprise entre 300°C et 450°C.

Une troisième application concerne une centrale thermo-mécanique de haut rendement, caractérisée en ce qu'elle comprend une installation selon la deuxième application de l'invention décrite ci-dessus et en ce que la vapeur d'eau à une température comprise entre 300°C et 450°C produite dans les deux évaporateurs est utilisée pour actionner une turbine produisant du travail mécanique, et en ce que la vapeur issue de la turbine, après détente, est utilisée comme source chaude de basse température, chauffant par sa condensation le mélangeur de la pompe à chaleur.

Une autre application du fluide constitué selon l'invention de métaux liquides fondus tels que le sodium, le plomb et l'étain concerne une pompe à chaleur à absorption de type II ou thermotransformateur fonctionnant entre une source chaude à température comprise entre 450°C et 600°C et une source froide à température au maximum égale à 350°C et revalorisant une fraction de la chaleur issue de la source chaude, en la portant à une température supérieure, cette élévation de température étant au minimum de 200°C et au maximum de 400°C.

Dans une première application correspondant au mélange sodium/mercure dans les proportions de 0,14 kg de Na par kg de Hg à l'état de concentration du mélange et à 0,10 kg de Na par kg de Hg à l'état de dilution, l'application concerne une pompe à chaleur fonctionnant avec une source froide à 110°C, une source chaude à 300°C et produisant de la chaleur utile dans un domaine de températures compris entre 430°C et 520°C.

Une autre application du fluide de travail, utilisable pour la présente l'invention, composé des mélanges binaires sodium/plomb ou sodium/étain concerne une pompe à chaleur fonctionnant avec une source froide à 310°C, une source chaude à 610°C et produisant de la chaleur utile dans un domaine de températures compris entre 700°C et 800°C.

Ces dernières applications permettent la récupération de calories qui jusqu'à ce jour étaient considérées comme perdues, soit pour les transmettre à un deuxième évaporateur d'eau dans le cas de la chaudière, soit pour réchauffer la vapeur d'alimentation de la turbine dans le cas d'une centrale thermique.

De toutes façons, l'invention sera mieux comprise en se référant à la description qui suit des figures 3 à 7 ci-jointes, données à titre illustratif et non limitatif, sur lesquelles :

- la figure 3 est un diagramme de Clapeyron d'une pompe à chaleur mercure/sodium ;
- la figure 4 est un diagramme de Clapeyron d'une pompe à chaleur sodium/plomb ou sodium/étain ;
- la figure 5 est un diagramme de Clapeyron d'une pompe à chaleur soufre/sodium ;
- la figure 6 représente une chaudière à haut rendement équipée d'une pompe à chaleur selon l'invention ;
- la figure 7 représente le schéma d'une centrale thermique à haut rendement, équipée d'une pompe à chaleur selon l'invention.

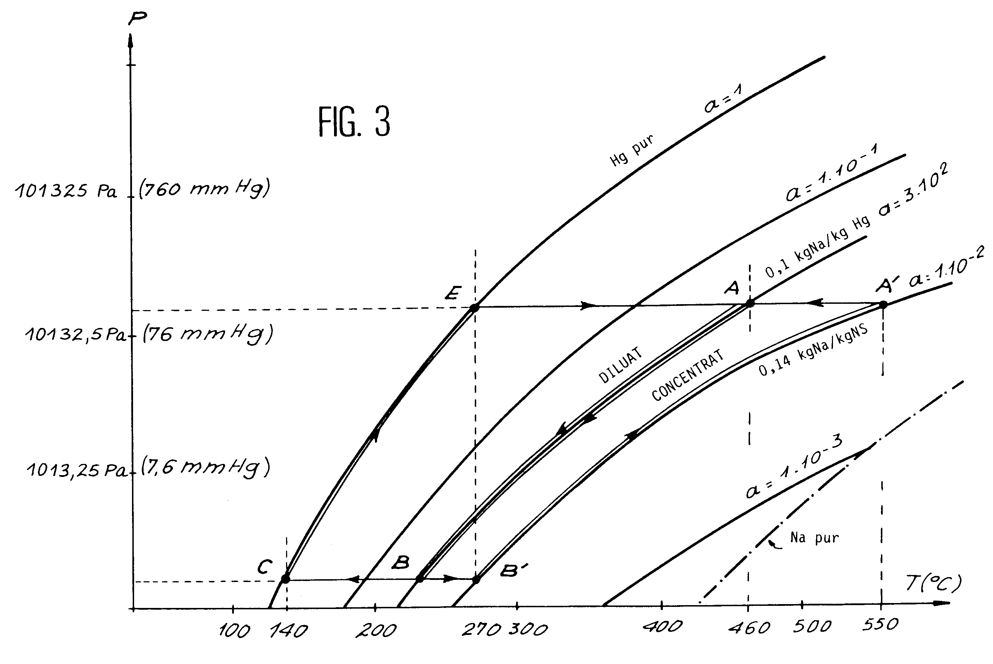

En se référant maintenant au diagramme de la figure 3, on va décrire une pompe à chaleur à absorption utilisant comme fluide de travail un mélange de mercure et de sodium. Ce diagramme représente en fonction de la température, la pression du mercure pur, du diluat et du concentrat entre lesquels évolue le mélange précédent. Bien entendu, la forme des courbes obtenues reste sensiblement la même lorsque l'activité du mercure dans la solution mercure/sodium varie. L'exemple que l'on décrit maintenant sur la figure 3 résulte d'un choix intéressant mais non limitatif dans lequel on utilise comme diluat une solution à 0,10 kg de Na par kg de Hg et comme concentrat une solution de 0,14 kg de Na par kg de Hg. La solution de diluat correspond à une activité du mercure dans la solution a = $3.10^{-2}$ où le titre molaire de cette solution est égal à 0,54 ; le concentrat correspond à une activité a = $10^{-2}$ et à une concentration molaire x = 0,45. La figure 3 est l'exacte transposition de la figure 2 précédente donnée à propos de l'art antérieur et on y retrouve les deux cycles A, B, C, E et A, B, B', A'. Les courbes de cette figure montrent qu'alors que la pression de vapeur du mercure pur est de 16000 Pa (120 mmHg) à la temperature de 270°C, celle du concentrat n'est plus que de 160 Pa (1,2 mm de Hg) à la même température. Autrement dit, on voit immédiatement le grand intérêt de ce mélange Hg/Na puisqu'il suffit d'ajouter 14% de Na dans le Hg pour diviser la pression de vapeur du Hg par un facteur égal à 100. Cette constatation est une mesure objective de l'intérêt du mélange des métaux liquides Na et Hg pour réaliser le fluide de travail d'une pompe à chaleur.

Le diagramme de la figure 3 montre que à l'aide du diluat à 0,10 kg de Na par kg de Hg et du concentrat à 0,14 kg de Na par kg de Hg on peut réaliser une pompe à chaleur dont les éléments sont aux températures qui suivent :

- le bouilleur est à 270°C,
- le condenseur est à 140°C,
- l'évaporateur est à 270°C et
- l'absorbeur est à une température de l'ordre de 460°C à 550°C.

Si l'on admet un écart moyen de température d'environ 30°C entre les fluides s'écoulant de part et d'autre des parois des échangeurs, il en résulte qu'au total, la source de chaleur qui alimente la pompe devra être à 270 + 30 = 300°C et la source froide à 140°C - 30°C = 110°C. Cette pompe produit une chaleur utile à la température de 460/550°C-30°C=430/520°C. Les calories de la source de chaleur qui entrent à 300°C sont donc revalorisées jusqu'à 430/520°C, c'est-à-dire d'une valeur de l'ordre de 130/220°C.

Il est important de remarquer que contrairement au cas des solutions aqueuses de sels (comme le bromure de lithium) où on est limité par la saturation en sel, il n'existe ici aucune limite de ce genre, le mercure et le sodium sont entièrement miscibles, dans tout le domaine de concentrations. Il en résulte que l'on peut très facilement obtenir une activité "a" de Hg nettement inférieure à la valeur a = $1.10^{-2}$ prise dans l'exemple ci-dessus. Par exemple avec des mélanges de l'ordre de 1 kg de Na pour 1 kg de Hg, l'activité a de Hg tombe en-dessous de $1.10^{-3}$. Le diagramme de la figure 3 montre que dans ces conditions, l'énergie thermique peut, théoriquement du moins, être valorisée d'environ 300°C à 400°C, passant par exemple d'un évaporateur à 300°C à un absorbeur à environ 600°C/700°C.

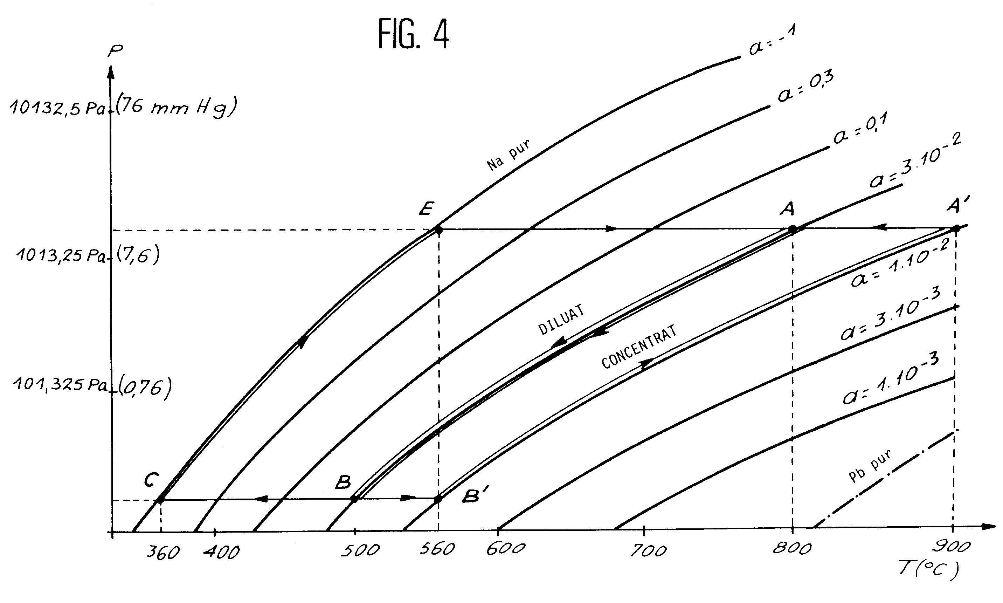

En se référant maintenant au diagramme de la figure 4 qui est relatif à un fluide de travail composé du mélange Na/Pb ou du mélange Na/Sn, on va décrire les cycles d'une pompe à chaleur fonctionnant à l'aide de l'un de ces deux fluides.

A partir du Na pur d'activité a = 1, on obtient les courbes a = 10-2 et a = $3.10^{-2}$ à l'aide des mélanges respectifs suivants :

a = $10^{-2}$ correspond à un concentrat composé de 9,6 kg de Sn par kg de Na ou de 16,7 kg de Pb par kg de Na.

La courbe d'activité correspondant à a = $3.10^{-2}$ correspond à un diluat obtenu soit par un mélange de 5,2 kg de Sn par kg de Na ou de 9,0 kg de Pb par kg de Na.

Les courbes du diagramme de la figure 4 permettent de réaliser une pompe à chaleur dont les caractéristiques en températures sont les suivantes :

- le bouilleur et l'évaporateur sont à 560°C ;
- le condenseur est à 360°C ;
- l'absorbeur est à 800°C/900°C.

L'ordre de grandeur raisonnable de l'écart de température à travers les parois des composants bouilleur-évaporateur et condenseur étant estimée à 50°C, et à 100°C dans l'absorbeur, la pompe à chaleur ainsi réalisée a les caractéristiques suivantes :

- elle est alimentée par une source chaude à 610°C ;
- elle alimente à son tour une source froide à 310°C ;
- elle produit de la chaleur utile à 700°C/800°C.

Les données thermodynamiques montrent que l'on obtient une activité du sodium encore dix fois plus faible (soit a = $1,5.10^{-3}$) pour un titre molaire de 0,8 de Sn dans Na, ce qui correspondrait à un mélange de 20 kg de Sn pour 1 kg de Na. Un tel mélange permettrait, théoriquement du moins, un relèvement de la température de l'ordre de 500°C. On pourrait donc ainsi produire de la chaleur utile à environ 1000-1100°C à partir d'une source à 600°C.

L'entalpie de vaporisation du sodium est de 3976,2 kJ/kg (950 kcal/kg), soit donc encore 3976,2 kJ/ℓ (950 kcal/litre). Cette propriété est donc particulièrement intéressante. Le flux de chaleur transporté par kg de vapeur de Na est presque deux fois plus grand que celui transporté par la vapeur d'eau, qui est déjà presque dix fois plus grand que ceux transportés par les vapeurs de tous les composés organiques et les fréons.

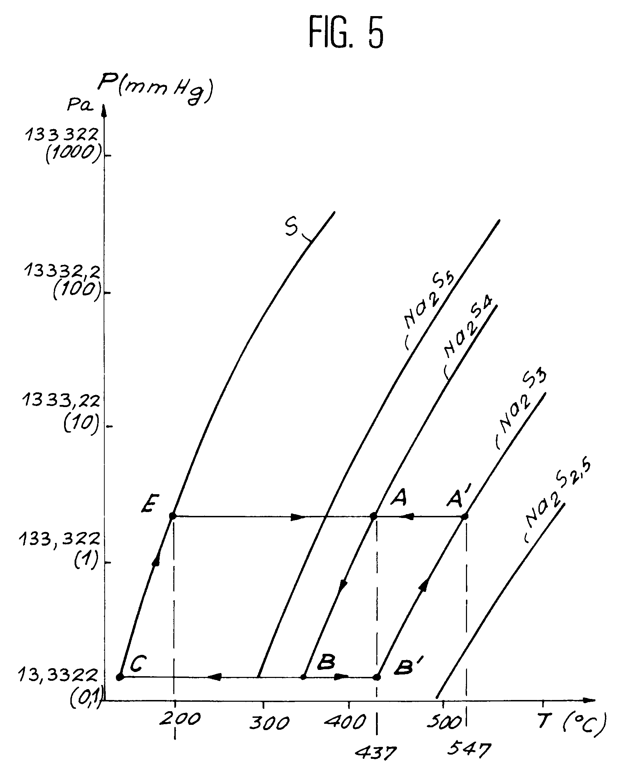

La figure 5 qui montre le diagramme de Clapeyron p = f(T) en coordonnées logarithmiques pour les mélanges de soufre et de Na, ainsi que pour différents sulfures de ces éléments, permet, de façon analogue à celle des figures 3 et 4, de comprendre la possibilité de réaliser une pompe à chaleur travaillant avec un tel mélange comme fluide.

En effet, ce diagramme de la figure 5 montre clairement la possibilité, en travaillant entre le soufre pur et le sulfure de composition $Na_2S_4$ de faire fonctionner une pompe à chaleur avec un absorbeur à 437°C 547°C et un évaporateur à 200°C ; Dans un tel mélange où le solvant est le soufre et le soluté le sodium, on peut s'affranchir des problèmes dus à la viscosité du soufre liquide grâce à l'addition d'un peu d'iode.

Parmi les nombreuses applications des pompes à chaleur à fluide de travail selon l'invention, on citera les deux suivants :

1°) Il existe dans les industries chimiques et parachimiques de nombreux fours, réacteurs, séparateurs.... qui utilisent de la chaleur à 400°C/500°C (soit par chauffage à flamme directe, soit par vapeur surchauffée) et qui rejettent ces effluents à environ 100°C/400°C.

Théoriquement, cette chaleur résiduaire est utilisable, soit comme affluent d'un autre appareil voisin, se contentant de cette température d'entrée (mais ceci a le gros inconvénient de lier les deux unités et donc de diminuer leur souplesse de fonctionnement), soit pour produire de la vapeur d'eau (ou pour la surchauffer) en liaison avec le circuit général de vapeur de l'usine. Mais ceci a aussi de nombreux inconvénients.

L'idéal serait de boucler l'appareil sur lui-même en réinjectant à l'entrée les calories qui sortent des effluents, après les avoir "révalorisées" dans une pompe à chaleur.

Ainsi, l'unité garde son indépendance et donc sa souplesse.

2°) On sait que les réacteurs nucléaires, dits de "haute température" plafonnent vers 650°C/750°C. Or un inventaire des utilisations thermiques éventuelles de cette chaleur nucléaire a montré qu'elle tombait dans un véritable "trou" où il n'existe pratiquement aucune application importante. Les grands domaines d'application se trouvent :

- soit en-dessous de 500°C (c'est toute la chimie et la parachimie organique, pétrolière),
- soit au-dessus de 900°C (les vapo-craqueurs des raffineries, les fours à ciment, les opérations sur les verres, céramiques).

On peut donc envisager qu'à la sortie d'un réacteur nucléaire (de 1000 MW) soit placée une gigantesque pompe à chaleur qui produise 500 MW de chaleur à 900°C/1100°C et 500 MW de chaleur à 300°C/500°C.

Ceci ouvrirait à l'industrie nucléaire toutes les transformations qui se font à plus de 900°C et qui lui sont actuellement interdites.

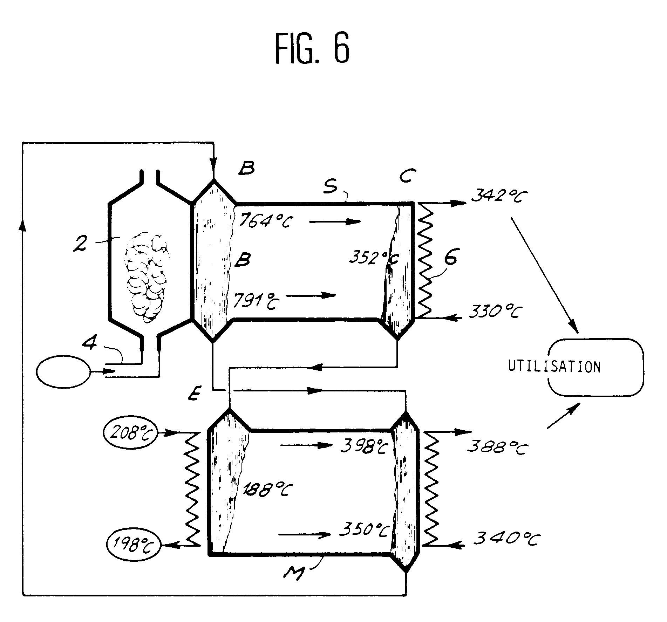

En se référant maintenant à la figure 6, on va décrire ci-après un exemple d'application du fluide de travail utilisable pour la présente invention à la réalisation d'une chaudière de haut rendement pour production de vapeur d'eau. Sur la figure 6, on retrouve le séparateur S et le mélangeur M d'une pompe à chaleur à absorption utilisant le couple de métaux liquides Hg-Na et opérant à moyenne pression. Le séparateur S comporte le désorbeur B et le condenseur C et le mélangeur M comporte l'évaporateur E et l'absorbeur A.

Dans le schéma de la figure 6, l'installation représentée comporte la chambre de combustion 2 d'une chaudière à vapeur à la base 4 de laquelle est injecté le fuel qui sert à entretenir la combustion. Selon l'invention, cette chambre de combustion 2 est associée directement au désorbeur B cu séparateur S auquel elle sert de source de chaleur. Ce séparateur S est intercalé entre la chambre de combustion 2 et un premier évaporateur d'eau 6 dans lequel de l'eau liquide pressurisée rentre à 330°C pour sortir à l'état vapeur à 342°C. C'est cette eau qui refroidit le condenseur C lequel fonctionne à 352°C. L'étage mélangeur M est alimenté par une source de chaleur sans valeur, par exemple les fumées de combustion de la chaudière, source dont les calories entrent dans l'évaporateur à 208°C pour en sortir à 198°C. Les données thermiques du système sont les suivantes :

- le bouilleur B du séparateur fonctionne entre 791°C et 764°C alors que le condenseur est à 352°C, l'ensemble étant sous la pression de 93325,4 Pa (700 mm de Hg).

Le premier évaporateur 6 est parcouru par une eau qui s'échauffe de 332°C à 342°C.

Le mélangeur M est sous une pression de 1600 Pa (12 mm de Hg) ; et l'évaporateur travaille à 188°C, l'absorbeur entre 350°C et 398°C.

Cette chaleur utile est transmise à un deuxième circuit d'eau pressurisée entrant liquide à 340°C et sortant à l'état vapeur à 388°C.

Au total il y a deux productions de vapeur d'eau : l'une à 342°C par la chaleur issue du séparateur S ; l'autre à 388°C par la chaleur issue du mélangeur M.

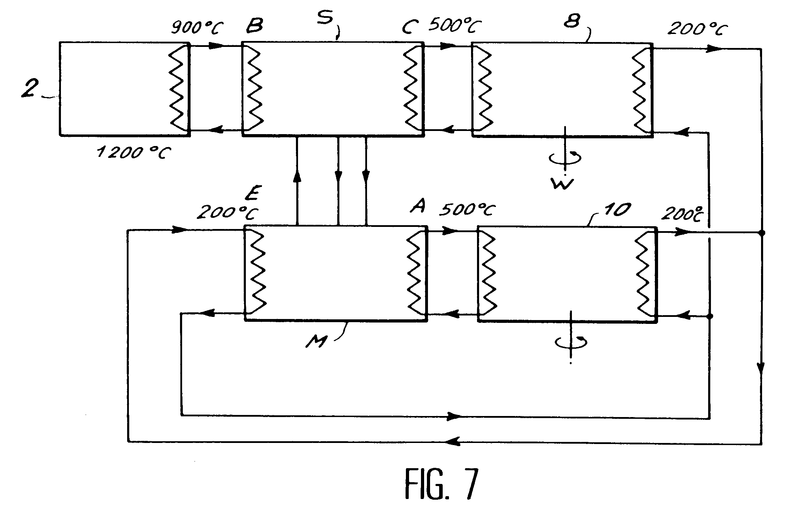

Sur la figure 7 enfin, on décrira une centrale thermique à haut rendement utilisant le fluide de travail selon l'invention. Comme on peut le voir sur cette figure 7, l'installation comporte entre une chambre de combustion 2 de la chaudière de la centrale et deux turbines à vapeur 8 et 10, une pompe à chaleur à métaux liquides comportant un séparateur S et un mélangeur M. Sur le schéma les températures d'entrée et de sortie dans chacun des composants de l'installation sont mentionnées et l'on voit que la chambre de combustion 2 chauffe à 900°C le bouilleur-désorbeur B du séparateur S, le condenseur C de ce dernier envoyant de la vapeur à 500°C dans la première turbine 8. Après détente dans la première turbine 8, la vapeur sortant à 200°C est réinjectée dans le mélangeur M de la pompe à chaleur qui revalorise les calories jusqu'à 500°C pour les injecter à leur tour dans une deuxième turbine à vapeur 10.

Au lieu d'utiliser deux turbines à vapeur d'eau, une variante de cette réalisation peut consister à réinjecter purement et simplement la vapeur ainsi récupérée et revalorisée à 500°C dans une turbine unique de plus grande dimension.

**Revendications**

1. Pompe à chaleur à absorption fonctionnant à très haute température comprise entre 200°C à 1000°C, comprenant un étage mélangeur formé d'un évaporateur (E) et d'un absorbeur (A) et un étage séparateur formé d'un bouilleur (B) et d'un condenseur (C), utilisant un fluide de travail constitué d'un mélange d'au moins deux constituants et soumis dans ces étages à des cycles successifs de mélange, pour donner une solution à faible concentration de soluté ou solution diluée, et de séparation, pour donner une première phase liquide constituée de solvant pur ou quasi-pur et une seconde phase liquide constituée d'une solution concentrée, le bouilleur recevant le mélange formé dans l'absorbeur et provoquant, sous l'effet de la chaleur fournie par une première source de chaleur, l'évaporation du solvant qui est envoyé dans le condenseur, la solution concentrée résultante étant dirigée vers l'absorbeur, le condenseur condensant le solvant sous l'effet d'une source froide et envoyant le solvant condensé à l'évaporateur où il est évaporé sous l'effet d'une deuxième source de chaleur et envoyé sous cette forme à l'absorbeur qui réalise à nouveau le mélange pour fournir la solution à faible concentration de soluté et une quantité de chaleur vers une source d'utilisation, caractérisée en ce que le fluide de travail est constitué par un mélange d'au moins deux éléments chimiques simples choisis de manière que les composés définis qu'ils pourraient éventuellement former entre eux soient instables et facilement dissociables à haute température, le premier de ces éléments étant le solvant qui est beaucoup plus volatil à la température du mélange que le ou les autres éléments qui forment les solutés, la nature et les proportions de chacun des éléments chimiques simples dans le mélange étant choisies pour que la pression de vapeur du mélange soit notablement inférieure à celle du seul premier élément le plus volatil tout au long du cycle de fonctionnement du fluide de travail dans la pompe.

2. Pompe à chaleur selon la revendication 1, caractérisée en ce que les éléments chimiques sont des métaux choisis pour que la pression de vapeur au-dessus des solutions, concentrée et diluée, soit notablement inférieure à celle du seul métal solvant pur.

3. Pompe à chaleur selon la revendication 2, caractérisée en ce que le métal solvant volatil est le mercure et l'unique métal soluté peu volatil est le sodium.

4. Pompe à chaleur selon la revendication 2, caractérisée en ce que le métal solvant volatil est le mercure et les métaux solutés sont le sodium et le potassium en proportions relatives comprises entre 15% et 85% de chacun de ces deux métaux.

5. Pompe à chaleur selon l'une des revendications 3 et 4, caractérisée en ce que la concentration de soluté (s) (sodium pur ou mélange sodium/potassium) est comprise entre 0,10 et 0,20 kg de soluté (s) par kg de mercure dans la solution concentrée et entre 0,05 et 0,15 par kg dans la solution diluée.

6. Pompe à chaleur selon la revendication 1, caractérisée en ce que l'élément chimique "solvant" est un métalloïde volatil, notamment l'iode, le phosphore ou le soufre, l'élément chimique "soluté" étant un métal choisi pour que la pression de vapeur au-dessus des solutions concentrée et diluée, soit notablement inférieure à celle du seul métalloïde pur.

7. Pompe à chaleur selon la revendication 6, caractérisée en ce que l'élément métalloïde solvant est le soufre et l'élément métal soluté est le sodium.

8. Pompe à chaleur selon l'une des revendications 3, 4, 5 et 7, caractérisée en ce qu'elle est une pompe à chaleur à absorption de type II, ou thermotransformateur, fonctionnant entre une source chaude à température comprise en 300°C et 450°C et une source froide à température au maximum égale à 200°C, et revalorisant une fraction de la chaleur issue de la source chaude en la portant à une température supérieure, cette élévation de température étant au minimum de 200°C et au maximum de 400°C.

9. Installation comprenant une pompe à chaleur selon l'une des revendications 3, 4, 5 et 7 associée à une chaudière de production de vapeur d'eau, caractérisée en ce que la pompe à chaleur est de type I, le séparateur de la pompe à chaleur étant thermiquement intercalé entre la chambre de combustion et un premier évaporateur producteur de vapeur d'eau à une température comprise entre 300°C et 450°C et dont le mélangeur revalorise une chaleur issue d'une source chaude quelconque disponible à basse température, soit au minimum égale à 160°C, en élevant son niveau thermique suffisamment pour chauffer un deuxième évaporateur producteur de vapeur d'eau à une température comprise entre 300°C et 450°C.

10. Centrale thermo-mécanique de haut rendement, caractérisée en ce qu'elle comprend une installation selon la revendication 9, la vapeur d'eau à une température comprise entre 300°C et 450°C produite dans les deux évaporateurs étant utilisée pour actionner une turbine produisant du travail mécanique, et en ce que la vapeur issue de la turbine, après détente, est utilisée comme source chaude de basse température, chauffant par sa condensation le mélangeur de la pompe à chaleur.

11. Pompe à chaleur selon la revendication 2, caractérisée en ce que le métal solvant est le sodium et l'unique métal soluté peu volatil est le plomb.

**12.** Pompe à chaleur selon la revendication 2, caractérisée en ce que le métal solvant volatil est le sodium et l'unique métal soluté peu volatil est l'étain.

**13.** Pompe a chaleur selon la revendication 2, caractérisée en ce que le métal solvant volatil est le sodium et les métaux solutés sont le plomb et l'étain, en proportions relatives comprises entre 15% et 85% de chacun de ces deux métaux.

**14.** Pompe à chaleur selon les revendications 11, 12 et 13, caractérisée en ce que la concentration de soluté (s) (plomb, étain ou mélange plomb/étain) est comprise entre 8 et 20 kg de soluté (s) par kg de sodium pour la solution concentrée et entre 4 et 10 kg par kg pour la solution diluée.

**15.** Pompe à chaleur selon l'une des revendications 11, 12, 13 et 14, caractérisée en ce qu'elle est une pompe à chaleur à absorption de type II ou thermotransformateur fonctionnant entre une source chaude à température comprise entre 450°C et 600°C et une source froide à température au maximum égale à 350°C et revalorisant une fraction de la chaleur issue de la source chaude, en la portant à une température supérieure, cette élévation de température étant au minimum de 200°C et au maximum de 400°C.

**Claims**

**1.** Absorption heat pump operating at very high temperatures between 200 and 1000°C and comprising a mixer stage formed by an evaporator and an absorber and a separator stage formed by a boiler and a condenser, using a working fluid constituted by a mixture of at least two constituents and subjected within said stages to successive mixing cycles, in order to give a solution with a low solute concentration or dilute solution, and separation, in order to give a first liquid phase constituted by pure or quasi-pure solvent and a second liquid phase constituted by a concentrated solution, the boiler receiving the mixture formed in the absorber and causing, under the effect of the heat supplied by a first heat source, the evaporation of the solvent which is fed into the condenser, the resulting concentrated solution being passed to the absorber, the condenser condensing the solvent under the effect of a cold source and delivering the condensed solvent to the evaporator, where it is evaporated under the effect of a second heat source and supplied in this form to the absorber, which again produces the mixture in order to supply the solution with a low solute concentration and a heat quantity to a use source, characterized in that the working fluid is constituted by a mixture of at least two simple, chemical elements chosen in such a way that the defined compounds which they could optionally form with one another are unstable and can easily be dissociated at high temperatures, the first of these elements being the solvent, which is much more volatile at the temperature of the mixture than the other element or elements forming the solutes, the nature and proportions of each of the simple chemical elements in the mixture being chosen so that the steam pressure of the mixture is well below that of the single, most volatile, first element all along the operating cycle of the working fluid in the pump.

**2.** Heat pump according to claim 1, characterized in that the chemical elements are metals chosen so that the vapour pressure above the concentrated and diluted solutions is well below that of the pure solvent metal alone.

**3.** Heat pump according to claim 2, characterized in that the volatile solvent metal is mercury and the sole, slightly volatile solute metal is sodium.

**4.** Heat pump according to claim 2, characterized in that the volatile solvent metal is mercury and the solute metals are sodium and potassium in relative proportions between 15 and 85% of each of said two metals.

**5.** Heat pump according to one of the claims 3 and 4, characterized in that the solute concentration (pure sodium or sodium/potassium mixture) is between 0.10 and 0.20 kg of solute per kg of mercury in the concentrated solution and between 0.05 and 0.15 per kg in the dilute solution.

**6.** Heat pump according to claim 1, characterized in that the "solvent" chemical element is a volatile metalloid, particularly iodine, phosphorus or sulphur and the "solute" chemical element is a metal chosen so that the vapour pressure above the concentrated and dilute solutions is well below that of the pure metalloid alone.

**7.** Heat pump according to claim 6, characterized in that the solvent metalloid element is sulphur and the solute metal element is sodium.

8. Heat pump according to one of the claims 3, 4, 5 and 7, characterized in that it is an absorption heat pump of type II or thermotransformer, operating between a hot source at a temperature between 300 and 450°C and a cold source having a maximum temperature of 200°C and revalorizing a fraction of the heat from the hot source by raising it to a higher temperature, said temperature rise being min 200°C and max 400°C.

9. Installation comprising a heat pump according to one of the claims 3, 4, 5 and 7, associated with a steam production boiler, characterized in that the heat pump is of type I, the separator of the heat pump being thermally interposed between the combustion chamber and a first steam producing evaporator at a temperature between 300 and 450°C and whose mixer revalorizes heat from a random heat source available at low temperature, namely at a minimum equal to 160°C, by raising its heating level sufficiently to heat a second steam producing evaporator to a temperature between 300 and 450°C.

10. High efficiency, thermomechanical power station, characterized in that it incorporates an installation according to claim 9, the steam at a temperature between 300 and 450°C produced in the two evaporators being used to operate a turbine producing mechanical work and in that the steam from the turbine, after expansion, is used as a low temperature heat source heating by its condensation the mixer of the heat pump.

11. Heat pump according to claim 2, characterized in that the solvent metal is sodium and the sole, slightly volatile solute metal is lead.

12. Heat pump according to claim 2, characterized in that the volatile solvent metal is sodium and the sole, slightly volatile solute metal is tin.

13. Heat pump according to claim 2, characterized in that the volatile solvent metal is sodium and the solute metals are lead and tin, in relative proportions between 15 and 85% of each of these two metals.

14. Heat pump according to claims 11, 12 and 13, characterized in that the solute concentration (lead, tin or lead/tin mixture) is between 8 and 20 kg of solute per kg of sodium for the concentrated solution and between 4 and 10 kg per kg for the dilute solution.

15. Heat pump according to one of the claims 11, 12, 13 and 14, characterized in that it is a type II absorption heat pump or thermotransformer operating between a heat source at a temperature between 450 and 600°C and a cold source at a maximum temperature of 350°C and revalorizing a fraction of the heat from the hot source by raising it to a higher temperature, said temperature rise being min 200°C and max 400°C.

**Patentansprüche**

1. Absorptionswärmepumpe für den Betrieb bei sehr hoher Temperatur, zwischen 200°C und 1000°C, eine Mischstufe umfassend, gebildet durch einen Verdampfer (E) und einen Absorber (A), und eine Trennstufe, gebildet durch einen Erhitzer (B) und einen Kondenser (C), wobei ein Arbeitsfluid verwendet wird, das durch eine Mischung von wenigstens zwei Bestandteilen gebildet wird und in diesen Stufen aufeinanderfolgende Zyklen durchläuft, des Mischens, um eine Losung mit geringer Konzentration von Gelöstem oder verdünnter Lösung zu ergeben, und des Trennens, um eine erste Flüssigphase zu ergeben, gebildet durch reines oder quasi-reines Lösungsmittel, und eine zweite Flüssigphase, gebildet durch eine konzentrierte Lösung, wobei der Erhitzer die Mischung erhält, die in dem Absorber gebildet wurde, und unter der Wirkung einer ersten Wärmequelle die Verdampfung des Lösungsmittels verursacht, das in den Kondensator geleitet wird, und der Kondensator das Lösungsmittel unter der Wirkung einer kalten Quelle kondensiert und das kondensierte Lösungsmittel zum Verdampfer leitet, wo es verdampft wird unter der Wirkung einer zweiten Wärmequelle und in dieser Form zum Absorber geleitet wird, der wieder die Mischung herstellt, um die Mischung mit geringer Konzentration von Gelöstem und eine Wärmemenge an eine Verwendungsquelle zu liefern,

**dadurch gekennzeichnet,**

daß das Arbeitsfluid gebildet wird durch eine Mischung von wenigstens zwei einfachen chemischen Elementen, so ausgewählt, daß die Verbindungen, die sie eventuell untereinander bilden könnten, instabil sind und leicht dissoziierbar bei hoher Temperatur, wobei das erste dieser Elemente das Lösungsmittel ist, das sehr viel leichter flüchtig ist bei der Temperatur der Mischung als das oder die anderen Elemente, die die gelösten Stoffe bilden, und die Art und die Anteile jedes einfachen chemischen Elements in der Mischung so gewählt werden, daß der Dampfdruck der Mischung während des gesamten Betriebszyklus des Arbeitsfluids in der Pumpe deutlich kleiner ist als der des am leichtesten flüchtigen ersten Elements allein, während des gesamten Betriebszyklus des Arbeitsfluids in der Pumpe.

2. Wärmepumpe nach Anspruch 1, dadurch gekennzeichnet, daß die chemischen Elemente Metalle sind, so ausgewählt, daß der Dampfdruck über den Lösungen, verdünnt und konzentriert, deutlich kleiner ist als der des reinen Lösungungsmetalls alleine.

3. Wärmepumpe nach Anspruch 2, dadurch gekennzeichnet, daß das flüchtige, lösende Metall das Quecksilber ist und das einzige, wenig flüchtige gelöste Metall das Natrium ist.

4. Wärmepumpe nach Anspruch 2, dadurch gekennzeichnet, daß das flüchtige, lösende Metall das Quecksilber ist und die gelösten Metalle das Natrium und das Kalium sind, mit jeweiligen Anteilen zwischen 15% und 85% von jedem dieser beiden Metalle.

5. Wärmepumpe nach einem der Ansprüche 3 und 4, dadurch gekennzeichnet, daß die Konzentration an Gelöstem (s) (reines Natrium oder Natrium-Kalium-Mischung) enthalten ist zwischen 0,10 und 0,20 kg Gelöstes (s) pro kg Quecksilber in der konzentrierten Lösung und zwischen 0,05 und 0,15 pro kg in der verdünnten Lösung.

6. Wärmepumpe nach Anspruch 1, dadurch gekennzeichnet, daß das "lösende" chemische Element ein flüchtiges Nichtmetall ist, vor allem Iod, Phosphor oder Schwefel, das "gelöste" chemische Element ein Metall ist, so ausgewählt, daß der Dampfdruck über konzentrierten und verdünnten Lösungen deutlich kleiner ist als der des reinen Nichtmetalls allein.

7. Wärmepumpe nach Anspruch 6, dadurch gekennzeichnet, daß das lösende nichtmetallische Element der Schwefel ist und das gelöste metallische Element das Natrium.

8. Wärmepumpe nach einem der Ansprüche 3, 4, 5 und 7, dadurch gekennzeichnet, daß sie eine Absorptionswärmepumpe des Typs II oder Thermotransformator bzw. Wärmewandler ist, der zwischen einer warmen Quelle mit einer Temperatur zwischen 300°C und 450°C und einer kalten Quelle mit einer Maximaltemperatur von gleich 200°C arbeitet und einen Teil der von der warmen Quelle stammenden Wärme aufwertet, indem er ihn auf eine höhere Temperatur bringt, wobei diese Temperaturerhöhung mindestens 200°C und höchstens 400°C beträgt.

9. Anlage, eine Wärmepumpe nach einem der Ansprüche 3, 4, 5 und 7 umfassend, verbunden mit einem Dampfkessel, **dadurch gekennzeichnet**, daß die Wärmepumpe vom Typ I ist, wobei der Separator bzw. Abscheider der Wärmepumpe thermisch eingefügt ist zwischen die Verbrennungskammer und einen ersten, Wasserdampf mit einer Temperatur zwischen 300°C und 450°C erzeugenden Verdampfer, und deren Mischer eine Wärme aufwertet, die von einer beliebigen verfügbaren warmen Quelle stammt, mit niedriger Temperatur, d.h. wenigstens gleich 160°C, indem sie deren thermisches Niveau ausreichend erhöht, um einen zweiten Verdampfer zu heizen, der Wasserdampf mit einer Temperatur zwischen 300°C und 450°C produziert.

10. Thermomechanische Zentrale mit hohem Wirkungsgrad, **dadurch gekennzeichnet**, daß sie eine Anlage nach Anspruch 9 umfaßt, wobei der in den beiden Verdampfern mit einer Temperatur zwischen 300°C und 450°C produzierte Dampf verwendet wird, um eine Turbine anzutreiben, die mechanische Arbeit leistet, **und dadurch**, daß der die Turbine verlassende Dampf, nach Entspannung, als Niedrigtemperatur-Warmquelle benutzt wird und durch seine Kondensation den Mischer der Warmepumpe heizt.

11. Wärmepumpe nach Anspruch 2, dadurch gekennzeichnet, daß das lösende Metall Natrium ist und das einzige wenig flüchtige gelöste Metall das Blei ist.

12. Wärmepumpe nach Anspruch 2, dadurch gekennzeichnet, daß das flüchtige lösende Metall Natrium ist und das einzige wenig flüchtige gelöste Metall das Zinn ist.

13. Wärmepumpe nach Anspruch 2, dadurch gekennzeichnet, daß das flüchtige lösende Metall das Natrium ist und die gelösten Metalle das Blei und das Zinn sind, mit jeweiligen Anteilen, die enthalten sind zwischen 15% und 85% von jedem dieser beiden Metalle.

14. Wärmepumpe nach den Ansprüchen 11, 12 und 13, dadurch gekennzeichnet, daß die Konzentration an Gelöstem (s) (Blei, Zinn oder Blei-Zinn-Mischung) enthalten ist zwischen 8 und 20 kg an Gelöstem pro kg Natrium für die konzentrierte Lösung und zwischen 4 und 10 pro kg für die verdünnte Lösung.

15. Wärmepumpe nach einem der Ansprüche 11, 12, 13 und 14, dadurch gekennzeichnet, daß sie eine Wärmeabsorptionspumpe des Typs II oder Thermotransformator bzw. Wärmewandler ist, der zwischen einer warmen Quelle mit einer Temperatur zwischen 450°C und 600°C und einer kalten Quelle mit einer Maximaltemperatur von gleich 350°C arbeitet und einen Teil der von der warmen Quelle stammenden Wärme aufwertet, indem er ihn auf eine höhere Temperatur bringt, wobei diese Temperaturerhöhung mindestens 200°C und höchstens 400°C beträgt.

FIG. 1

FIG. 3

EP 0 490 767 B1

FIG. 4

EP 0 490 767 B1

# FIG. 5

# FIG. 6

FIG. 7